Europäisches Patentamt

European Patent Office

Office européen des brevets

(19)

(11) Numéro de publication: **0 247 930**

**B1**

(12)

# FASCICULE DE BREVET EUROPEEN

(45) Date de publication du fascicule du brevet: **28.11.90**

(51) Int. Cl.⁵: **B 23 K 26/02,** B 23 Q 17/22

(21) Numéro de dépôt: **87401152.1**

(22) Date de dépôt: **22.05.87**

(54) **Ensemble poignet-broche pour machine de découpe et de soudage par faisceau laser.**

(30) Priorité: **27.05.86 FR 8607537**

(43) Date de publication de la demande:
**02.12.87 Bulletin 87/49**

(45) Mention de la délivrance du brevet:
**28.11.90 Bulletin 90/48**

(84) Etats contractants désignés:
**BE DE ES GB IT NL SE**

(56) Documents cités:
**EP-A-0 163 207**

(73) Titulaire: **RENAULT AUTOMATION**
**8/10 avenue Emile Zola**
**F-92109 Boulogne-Billancourt (FR)**

(72) Inventeur: **Daniel, Serge**
**14, rue du Vieux Ru7**
**F-77210 Avon (FR)**
Inventeur: **Lagarde, Eric**
**2, Villa Carnot**
**F-94230 Cachan (FR)**
Inventeur: **Paganelli, Cataldo**
**6, Square Fernand Widal**
**F-91000 Evry (FR)**

(74) Mandataire: **Saint Martin, René et al**
**Régie Nationale des Usines Renault 8 & 10,**
**avenue Emile Zola**
**F-92109 Boulogne Billancourt (FR)**

Courier Press, Leamington Spa, England.

EP 0 247 930 B1

## Description

La présente invention se rapporte à une machine de découpe et de soudage par faisceau laser telle que décrite dans le préambule de la revendication. Une telle machine est connue du document EP—A1—0163207.

L'invention se propose d'améliorer la machine dévoltée dans ce document.

A cet effet, elle est caractérisée par le fait que ledit capteur est un palpeur de mesure, et que ledit palpeur est monté dans l'axe de la buse laser à l'opposé de la buse laser par rapport à l'axe de rotation de ladite buse.

Grâce à l'introduction de la fonction additionnelle de palpage, un cycle automatique de travail sans aucune intervention manuelle peut être aisément programmé. Un guidage simple et efficace d'un faisceau laser de grande puissance est obtenue au moyen de cette broche creuse.

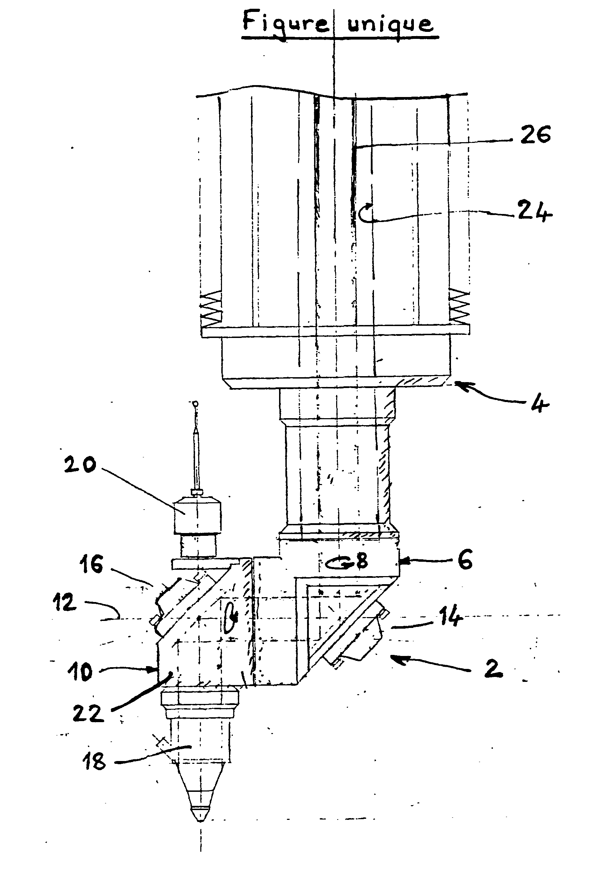

D'autres particularités et avantages apparaîtront plus clairement à la lecture de la description qui suit d'un mode de réalisation préféré, donné à titre d'exemple non limitatif, en référence à la figure unique annexée qui représente schématiquement un ensemble poignet-broche conforme à l'invention.

Cette figure montre un poignet laser 2 surmonté d'une broche 4 d'une unité de translation verticale non représentée pour une machine cinq axes de découpe et de soudage laser.

Ce poignet comporte un corps 6 susceptible de tourner autour du quatrième axe 8, et une partie d'extrémité 10 susceptible de tourner autour du cinquième axe 12.

Le corps 6 est pourvu d'un miroir 14. La partie d'extrémité 10 comporte un miroir 16, une buse de laser 18 et un palpeur de mesure 20.

Ce palpeur de mesure est fixé sur le support 22 de cette buse de laser 18 et de ce miroir 16, à l'opposé de cette buse et dans l'axe de celui-ci.

La broche 4 est traversée par un alésage axial 24 dont la section droite est déterminée de manière à laisser passer un faisceau laser 26 de puissance élévée avec un dispositif de coudage de celui-ci tel qu'un miroir. Ce faisceau laser provient d'un générateur de rayonnement laser extérieur à la machine; il traverse la broche 4 après un parcours à l'intérieur par exemple de profilés de structure.

Un cycle automatique de fonctionnement comprend par exemple les étapes suivantes:

un premier mouvement de rotation de 180° autour du cinquème axe 12, appliqué à la partie d'extrémité 10 du poignet laser 2;

une opération programmée de palpage de la pièce ou de son support au moyen du palpeur intégré 20 afin de localiser cette pièce ou ce support dans le volume de travail de la machine; un changement de repère est ainsi obtenu pour le programme de découpe ou de soudage (gestion par ordinateur);

un second mouvement de rotation de 180° autour du cinquième axe 12 pour présenter la buse de laser 18 devant la pièce;

une exécution du programme de découpe ou de soudage;

un troisième mouvement de rotation de 180° autour du cinquième axe 12 pour effectuer avec la palpeur intégré 20, un contrôle dimensionnel de toutes les phases opératoires réalisées du programme de découpe ou de soudage.

## Revendication

Ensemble poignet-broche pour machine de découpe et de soudage par faisceau laser comportant une broche (4) présentant un alésage axial (24) d'axe (8) de section droite suffisante pour permettre le passage d'un faisceau laser (26) de puissance élevée et, en bout de broche (4), un poignet (2) à deux axes de rotation (8, 12) concourants, le poignet incorporant deux miroirs (14, 16) permettant un double coudage du faisceau laser, les deux miroirs (14, 16) étant associés d'une part à la broche (4) et d'autre part à une buse laser (18) pouvant tourner au bout du poignet (2) autour de l'axe de rotation (12), un capteur de mesure étant associé à l'ensemble poignet-broche, caractérisé par le fait que ledit capteur (20) est un palpeur de mesure, et que ledit palpeur est monté dans l'axe de la buse laser (18), à l'oppose de la buse laser (18) par rapport à l'axe de rotation de ladite buse (18).

## Patentanspruch

Spindelgelenkeinheit für Laserstrahl-Schneid- und Schweißmaschinen, mit einer Spindel (4), die eine Axialbohrung (24) mit einer Achse (8) und mit einem geraden Querschnitt aufweist, der zum Durchlaß eines Laserstrahls (26) erhöhter Leistung ausreicht und mit einem Gelenk (2) am Ende der Spindel (4), mit zwei zusammenlaufenden Drehachsen (8, 12), wobei das Gelenk zwei Spiegel (14, 16) enthält zur zweifachen Ablenkung des Laserstrahls und wobei die beiden Spiegel (14, 16) einerseits der Spindel (4) und andererseits einem Laserausgang (18) zugeordnet sind, der am Ende des Gelenks (2) um die Drehachse (12) verdrehbar ist und wobei ein Meßaufnehmer der Spindelgelenkeinheit zugeordnet ist, dadurch gekennzeichnet, daß der Aufnehmer (20) ein Meßfühler ist und daß der Fühler in der Achse des Laserausgangs (18) angeordnet ist gegenüber dem Laserausgang (18) bezüglich der Drehachse (12) des Ausgangs (18).

## Claim

A wrist joint-spindle assembly for a laser beam cutting and welding machine comprising a spindle (4) having an axial bore (24) with an axis (8) of a cross-section sufficient to permit the passage of a high-power laser beam (26) and, at the end of the spindle (4), a wrist joint (2) with two concurrent axes of rotation (8, 12), the wrist joint incorporating two mirrors (14, 16) permitting double diversion of the laser beam, the two mirrors (14, 16) being associated on the one hand with the spindle (4) and on the other hand with a laser tip (18) which can turn at the end of the wrist joint (2) about the axis of rotation (12), a measuring pick-up being associated with the wrist joint-spindle assembly, characterised in that said pick-up (20) is a measuring feeler and that said feeler is mounted on the axis of the laser tip (18) in opposite relationship to the laser tip (18) with respect to the axis of rotation (12) of said tip (18).

Figure unique